# EUROPÄISCHE PATENTSCHRIFT

(11) **EP 4 523 571 B1**
(45) Veröffentlichungstag und Bekanntmachung des Hinweises auf die Patenterteilung: **22.10.2025**
(21) Anmeldenummer: 24188743.9
(22) Anmeldetag: 16.07.2024
(51) Int. Cl.: A47C 23/04, A47C 23/00, A47C 21/06, A47C 20/04, A47C 19/02

(54) **BETTGESTELL**
BED FRAME
CADRE DE LIT

(30) Priorität: 12.09.2023 DE 102023124554
(43) Veröffentlichungstag der Anmeldung: 19.03.2025
(73) Patentinhaber: Sino International Group Ltd., Hongkong (HK)
(72) Erfinder: Knabe, Sven, 51647 Gummersbach (DE)
(74) Vertreter: Köchling, Marietta

(56) Entgegenhaltungen:
- EP-A1- 0 699 406
- EP-A1- 3 659 469
- DE-A1- 102021 122 888

## Beschreibung

Die Erfindung betrifft ein Bettgestell mit einem umlaufenden ersten Rahmenteil, einem am ersten Rahmenteil befestigten oder befestigbaren formstabilen Auflageteil, einer das erste Rahmenteil samt Auflageteil überdeckenden Abdeckvorrichtung und einer mehrteiligen umlaufenden Spannleiste, die von Rändern der Abdeckvorrichtung überdeckt und umgriffen ist, wobei die Ränder mit ihren freien, die Spannleiste überragenden Endbereichen umgeschlagen und unterseitig an Bestandteilen der Spannleiste fixiert sind. Ein Bettgestell, welches dem der vorliegenden Erfindung ähnlich ist, wird in der EP0699406A1 beschrieben.

Im Stand der Technik sind solche Bettgestelle insbesondere als Untergestell für Boxspringbetten bekannt. Das umlaufende Rahmenteil, das in der Regel ein rechteckiger oder quadratischer Rahmen ist, besteht vorzugsweise aus einem Hohlprofilrahmen aus Metall, wobei an dem Rahmenteil ein Auflageteil, wie beispielsweise ein Metallgestänge oder -gitter befestigt wird, welches eine Auflagefläche für eine entsprechende Auflage oder Matratze bereitstellt. Das Auflageteil liegt in einer Ausgangslage in einer Auflageebene, die parallel und mit einem Abstand zur Aufstellebene des Bettgestells ausgerichtet ist. Etwa von dieser Auflageebene ausgehend erstreckt sich eine Spannleiste mit einer gewissen Breite in Richtung der Aufstellebene. In Längsrichtung folgt die Spannleiste dem umlaufenden Rahmenteil. Die Spannleiste ist mehrteilig und besteht aus Holz. Beispielsweise ist jeweils ein Leistenteil an Kopf- und Fußende des Bettgestells und jeweils ein Leistenteil an den Gestellseiten angeordnet. In den Eckbereichen des Bettgestells stoßen die Teile aneinander. So ergibt sich eine umlaufende Spannleiste. Am Rahmenteil können zudem Bettfüße befestigt sein.

Eine Abdeckvorrichtung, die z.B. ein Textiltuch sein kann, ist über das Rahmenteil samt Auflageteil und Spannleiste gespannt und mit ihren Endbereichen an der Spannleiste befestigt. Die Abdeckvorrichtung wird dazu auf das Auflageteil aufgelegt, wobei die Ränder das Auflageteil seitlich überragen und die die Spannleiste außenseitig, in ihrem sichtbaren Bereich abdecken. Die Endbereiche der Abdeckvorrichtung werden unterseitig an Bestandteilen der Spannleiste befestigt. Unterseitig bedeutet, dass die Befestigung unterhalb des Bettgestells erfolgt, also in einem der Aufstellebene zugewandten Bereich des Bettgestells und damit in einem später nicht mehr sichtbaren Bereich. Die Befestigung der Endbereiche an der Spannleist erfolgt mittels Tackernadeln. Auf diese Weise wird die Unterkonstruktion des Bettgestells durch die Abdeckvorrichtung überdeckt.

Ein Nachteil bei der Befestigung mittels Tackernadeln besteht darin, dass bei der Befestigung der Endbereiche an der Spannleiste Falten im sichtbaren Bereich der Ränder entstehen. Zudem ist die Befestigungsmethode aufwändig, weil der Stoff glatt über die Spannleiste gezogen werden muss und zum Setzten der Tackernadeln strammgehalten werden muss.

Ein weiterer Nachteil dieser Befestigungsmethode liegt darin, dass eine Abdeckvorrichtung, die einmal an der Spannleiste fixiert ist, nicht ohne Beschädigung oder Zerstörung der Abdeckvorrichtung wieder gelöst werden kann. Sollte die Abdeckung später einmal Defekte aufweisen oder verschmutzen, kann sie weder ausgetauscht noch gewaschen werden.

Die Aufgabe der Erfindung liegt somit darin, ein Bettgestell mit einer zerstörungsfrei lösbaren Abdeckvorrichtung bereitzustellen, wobei das Bettgestell besonders einfach und kostengünstig herstellbar sein soll.

Zur Lösung der Aufgabe schlägt die Erfindung , wie in Anspruch 1 definiert, vor, dass die Spannleiste ein Profil ist, welches sich quer zu einer Auflageebene des Auflageteils erstreckt und einen parallel zum Auflageteil abragenden Profilschenkel aufweist, der einen Abstand von der Auflageebene hat und sich unterhalb des Auflageteils erstreckt, und dass an den Endbereichen der Abdeckvorrichtung Klemmstücke befestigt sind, die in der Solllage auf den ersten Profilschenkel aufgesteckt sind.

Profile lassen sich besonders kostengünstig und einfach herstellen, beispielsweise durch das Walzen oder das Stranggießen, wobei eine Vielzahl von Profilformen zur Verfügung steht. Das Profil ist in dessen Längsrichtung dem Rahmenteil folgend ausgerichtet und umlaufend am Bettgestell, vorzugsweise am Rahmenteil, befestigt. Das Profil erstreckt sich zudem quer zur Auflageebene des Auflageteils, also senkrecht zur Aufstellebene des Bettgestells. Ein Profilschenkel ist parallel zum Auflageteil bzw. zu dessen Auflageebene gerichtet und erstreckt sich unterhalb des Auflageteils und damit in den Raum zwischen der Aufstellebene (Fußboden) und Auflageebene, hinter der Spannleiste, sodass die Klemmstücke, die in Solllage auf den Schenkel aufgesteckt sind, nicht sichtbar sind. Mit den Klemmstücken ist die Abdeckvorrichtung auf dem Gestell fest aufgespannt und daran gehalten. Die Klemmstücke ermöglichen eine schnelle und einfache Befestigung der Abdeckvorrichtung an der Spannleiste und zudem ein anschließendes zerstörungsfreies Lösen. Die Abdeckvorrichtung kann gewaschen oder ausgetauscht werden, ohne dass das gesamte Bettgestell erneuert werden muss.

Vorzugweise ist dabei vorgesehen, dass das Auflageteil und die Spannleiste sowie die Abdeckvorrichtung an dem ersten Rahmenteil befestigt sind, wobei das Bettgestell ein zweites Rahmenteil aufweist, an dem das erste Rahmenteil befestigt oder befestigbar ist.

Das zweite Rahmenteil bietet für das Bettgestell eine verbesserte Stabilität. Zudem können an dem zweiten Rahmenteil Halter zur Befestigung von Bettfüßen vorgesehen sein, mit denen das Bettgestell auf dem Fußboden aufgestellt wird. Sofern das erste Rahmenteil bewegbare Teile oder Segmente aufweist, können die bewegbaren Teil durch Scharniere oder Gelenkhebel an dem zweiten Rahmenteil befestigt sein und sich daran abstützen und relativ zu dem zweiten Rahmenteil verstellt werden, während das zweite Rahmenteil starr auf der Aufstellebene aufsteht oder -liegt.

Bevorzugt kann das zweite Rahmenteil Halter und daran befestigbare oder befestigte Bettfüße aufweisen.

Abhängig von dem Material, aus dem die Spannleiste gefertigt ist, eignen sich verschiedene Befestigungsverfahren, wobei besonders bevorzugt vorgesehen ist, dass das erste Rahmenteil, das zweite Rahmenteil sowie das Auflageteil aus Metall bestehen und dass die Spannleiste ein Metallprofil ist.

In diesem besonders bevorzugten Fall, bestehen sämtliche Bauteile aus Metall und lassen sich beispielsweise durch Schweißen kostengünstig und haltbar miteinander verbinden.

Alternativ kann vorgesehen sein, dass die Spannleiste ein Kunststoffprofil ist.

Auch Kunststoffprofile lassen sich besonders einfach und kostengünstig herstellen. Eine Verbindung zum Rahmenteil kann dann beispielsweise durch ein Verschrauben erfolgen.

Bevorzugt ist zudem vorgesehen, dass die Klemmstücke leistenartige Klemmhalter mit einem etwa U-förmigen Querschnitt sind.

Die U-Form ermöglicht es, das Klemmstück schnell und einfach auf den Profilschenkel aufzustecken, wobei die leistenartige Form des Klemmhalters einen verbesserten Einzug gewährleistet, d.h. die Faltenbildung an den Rändern der Abdeckvorrichtung verhindert ist.

Dabei ist vorzugsweise vorgesehen, dass die Klemmstücke Kunststoffprofile sind.

Solche Profile lassen sich einfach und kostengünstig z.B. als Extrusionsprofile herstellen.

Vorzugsweise ist vorgesehen, dass die Klemmstücke an den Endbereichen der Abdeckvorrichtung angenäht sind, sodass eine dauerhafte und stabile Befestigung sichergestellt ist.

Es ist bevorzugt vorgesehen, dass die Spannleiste ein Hohlprofil mit einem quadratischen oder rechteckigen Querschnitt ist, wobei ein parallel zum Auflageteil gerichteter Profilschenkel in Richtung unter das Auflageteil verlängert ist, wobei der Profilschenkel einen Abstand von der Auflageebene aufweist.

Das Profil wird in der Weise an dem Bettgestell befestigt und ausgerichtet, dass ein verlängerter erster Profilschenkel parallel und mit einem Abstand zum Auflageteil angeordnet ist. Die Ausrichtung der anderen Profilschenkel ergibt sich dann aufgrund des rechteckigen bzw. quadratischen Querschnitts von selbst, wobei ein zweiter Profilschenkel ebenfalls parallel zum ersten Profilschenkel angeordnet ist und zwei weitere Profilschenkel quer zur Auflageebene des Auflageteils gerichtet sind.

Solche Profile sind besonders formstabil, was vorteilhaft ist, da die Abdeckvorrichtung wie ein Bezug auf das Gestell aufgezogen und an den Profilschenkeln mittels Klemmstücke unter Spannung festgeklemmt wird, wodurch entsprechende Kräfte auf den Schenkel und die gesamte Spannleiste einwirken.

Alternativ kann vorgesehen sein, dass die Spannleiste ein L-Profil, ein U-Profil oder ein C-Profil ist, wobei wenigstens ein Profilschenkel parallel zum Auflageteil in Richtung unter das Auflageteil gerichtet ist und wenigstens ein weiterer Profilschenkel quer zur Auflageebene gerichtet ist

Auch diese Profile sind besonders einfach und kostengünstig herstellbar.

Bevorzugt ist dabei vorgesehen, dass am Rahmenteil ein vorzugsweise umlaufender Streifen aus Metall oder Kunststoff zur Erweiterung des Auflageteils befestigt ist, wobei der Streifen und das Auflageteil in einer Ebene angeordnet sind, sodass die der Aufstellebene des Bettes abgewandte Oberfläche des Streifens und des Auflageteils eine gemeinsame ebene Auflagefläche bilden.

Der Streifen dient dazu, die Auflagefläche des Auflageteils zu erweitern. Auf dem Streifen können beispielsweise Polsterteile aufgelegt werden. Wesentlich ist dabei, dass das Auflageteil und der Streifen in der Weise an dem Rahmenteil befestigt sind, dass diese eine gemeinsame Oberfläche mit einer gemeinsamen Auflagefläche bilden. Bei einer besonders bevorzugten Ausgestaltung besteht der Streifen und sämtliche Bestandteile des Bettgestells aus Metall, sodass diese durch ein Schweißen kostengünstig und haltbar miteinander verbunden werden können.

Dabei kann besonders bevorzugt vorgesehen sein, dass die Spannleiste einen weiteren Profilschenkel aufweist, mit dem die Spannleiste an dem Rahmenteil befestigt ist, wobei der weitere Schenkel der Streifen ist, mit dem die Spannleiste am Rahmenteil befestigt ist.

Es ist vorzugsweise vorgesehen, dass das Rahmenteil samt Auflageteil und Spannleiste in ein verstellbares Kopfteil, ein verstellbares Fußteil und ein feststehendes Mittelteil unterteilt ist, wobei das Rahmenteil mit seinem Mittelteil an dem zweiten Rahmenteil fest fixiert ist, vorzugsweise verschweißt oder verschraubt ist, und das Kopfteil und das Fußteil relativ zu dem zweiten Rahmenteil verstellbar sind, wobei die Ränder der Abdeckvorrichtung in ersten Übergangsbereichen zwischen dem Mittelteil und dem Kopfteil und in zweiten Übergangsbereichen zwischen dem Mittelteil und dem Fußteil jeweils einen Schlitz aufweisen durch den die Ränder in Randabschnitte geteilt sind, wobei an jedem Randabschnitt ein Klemmstück befestigt ist.

Diese Ausgestaltung ermöglicht eine Verstellung des gesamten mit der Abdeckvorrichtung bespannten Teils des Bettgestells. Das Bettgestell behält also auch bei einer Verstellung von Kopf- und/oder Fußteil seine ansprechende optische Erscheinung, weil die Abdeckung an den bewegten Teilen des Gestells gehalten ist und schlicht mitbewegt wird. Die Ränder sind durch Schlitze in Randabschnitte unterteilt, an denen jeweils ein Klemmstück befestigt ist, um die entsprechende Bewegung zuzulassen.

Dabei kann bevorzugt vorgesehen sein, dass das Fußteil zwei relativ zueinander bewegbare Teile aufweist, wobei der Randabschnitt des Fußteils in einem dritten Übergangsbereich zwischen den Teilen einen Schlitz aufweist, durch den der Randbereich in weitere Abschnitte geteilt ist, wobei an jedem Abschnitt ein Klemmstück befestigt ist.

Die Verstellung des Kopfteils und des Fußteils oder der Fußteile erfolgt vorzugsweise elektrisch, um den Komfort zu erhöhen. Elektrische Antriebe sind in an sich bekannter Art und Weise unterhalb der verstellbaren Teile montiert und mit einem Anschluss an ein Stromnetz ausgestaltet.

Wahlweise kann bevorzugt vorgesehen sein, dass die Abdeckvorrichtung eine Tuchbespannung aus Textil oder Leder oder einer Kombination dieser Materialien ist. In einer einfachen Ausführungsform ist diese unmittelbar auf das Auflageteil aufgelegt.

Zusätzlich kann die Abdeckvorrichtung mit einem Schaumstoff versteppt sein, der zwischen der Abdeckvorrichtung und dem Auflageteil angeordnet ist, wobei der Schaumstoff beispielsweise als Schutz der Abdeckvorrichtung dienen kann.

Alternativ kann vorzugsweise vorgesehen sein, dass die Abdeckvorrichtung aus einer Folie besteht.

Besonders bevorzugt ist vorgesehen, dass auf das Auflageteil und/oder den Streifen eine Polsterung aufgelegt ist, wobei die Polsterung vorzugsweise eine Matratze mit einem Taschenfederkernaufbau ist, und wobei das Auflageteil samt Polsterung von der Abdeckvorrichtung überdeckt ist.

Dies ist eine besonders komfortable Ausführungsform. Die Abdeckvorrichtung hält die Polsterung auf dem Auflageteil in ihrer vorgesehenen Position und verhindert ein Verrutschen der Polsterung. Auf die Abdeckvorrichtung kann dann eine weitere Matratze aufgelegt werden, die ebenfalls einen Taschenfederkernaufbau aufweisen kann. Auch bekannte Schaumstoffmatratzen können aufgelegt werden.

Zudem ist es vorzugsweise vorgesehen, dass die Abdeckvorrichtung ein quaderartiger Bezug ist, mit einer Oberseite, die zumindest über das Auflagerteil und einen Teil des Rahmenteils gespannt ist, mit Rändern als Seitenwände des quaderartigen Bezuges, die einen Teil des Rahmenteils und die Spannleiste überdecken und an deren Endbereichen die Klemmstücke befestigt sind, die auf die Profilschenkel aufgesteckt sind und mit denen der Bezug in Solllage gehalten ist und mit einer Unterseite, die eine quadratische oder rechteckige durch die Endbereiche und die daran befestigten Klemmstücke eingerahmte Öffnung aufweist.

Die Öffnung ist vorgesehen, um den Bezug über die zu überdeckenden Teile des Bettgestells ziehen zu können. Anschließend kann der Bezug entsprechend ausgerichtet werden und mit den Klemmstücken an dem Profilschenkel unter Spannung fixiert werden.

Es kann vorzugsweise vorgesehen sein, dass auf das Auflageteil mindestens eine weitere Polsterung, vorzugsweise eine Matratze mit Federkernaufbau, aufgelegt oder auflegbar ist.

Auf die Polsterung kann ein zusätzlicher Topper aufgebracht werden, um den Liegekomfort zusätzlich zu verbessern.

Ausführungsbeispiele des erfindungsgemäßen Bettgestells sind in den Figuren gezeigt und nachstehend näher erläutert.

Es zeigt:
- Fig. 1: einen Ausschnitt eines ersten erfindungsgemäßen Bettgestells;
- Fig. 2: einen Ausschnitt eines zweiten erfindungsgemäßen Bettgestells;
- Fig. 3: einen Ausschnitt eines dritten erfindungsgemäßen Bettgestells;
- Fig. 4: ein Bettgestell ohne Abdeckvorrichtung in Ansicht.

Die Figuren zeigen verschiedene Ausführungsformen eines erfindungsgemäßen Bettgestells. Die Bettgestelle weisen sämtlich ein umlaufendes erstes Rahmenteil 1, ein am ersten Rahmenteil 1 befestigtes formstabiles Auflageteil 2 und eine das erste Rahmenteil 1 samt Auflageteil 2 überdeckende Abdeckvorrichtung 3 auf. Zudem ist eine mehrteilige umlaufende Spannleiste 4 vorgesehen, die von Rändern 5 der Abdeckvorrichtung 3 überdeckt und umgriffen ist. Die Ränder 5 sind mit ihren freien, die Spannleiste 4 überragenden Endbereichen umgeschlagen und unterseitig an Bestandteilen der Spannleiste 4 fixiert sind.

Das umlaufende erste Rahmenteil 1 besteht aus einem Hohlprofilrahmen aus Metall mit einem quadratischen Querschnitt, wobei an diesem ein Auflageteil 2 in Form eines Metallgitters befestigt ist. Die quadratische Querschnittsform des ersten Rahmenteils 1 ermöglicht es, das Auflageteil 2 auf einen Schenkel des ersten Rahmenteils 1 auflegen zu können und mit diesem zu verschweißen. Eine Spannleiste 4 ist an einem umlaufenden Streifen 10 aus Metall befestigt, der ebenfalls auf den Schenkel des ersten Rahmenteils 1 aufgelegt und mit diesem verschweißt ist. Der Streifen 10 und das Metallgitter bilden eine gemeinsame Auflageebene.

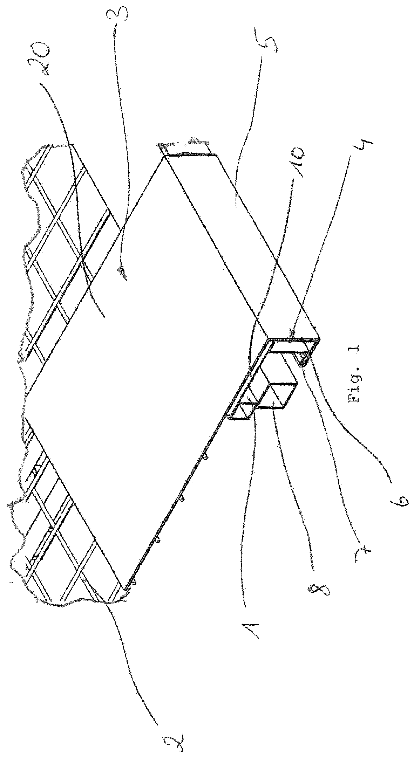

Eine Abdeckvorrichtung 3, die z.B. ein Stofftuch sein kann, ist in den Fig. 1 bis 3 über das Rahmenteil 1 samt Auflageteil 2 und Spannleiste 4 gespannt und ist mit Klemmstücken 7, die an Endbereichen des Stofftuches (Abdeckvorrichtung 2) befestigt sind, auf die Spannleiste 4 aufgesteckt.

Die Spannleiste 4 ist ein Hohlprofil aus Metall mit einem im Wesentlichen rechteckigen Querschnitt. Das Hohlprofil (Spannleiste 4) ist in dessen Längserstreckung dem ersten Rahmenteil 1 folgend ausgerichtet und umlaufend am ersten Rahmenteil 1 befestigt. Es erstreckt sich quer zu der Auflageebene des Auflageteils 2 und weist einen parallel zum Auflageteil 2 abragenden ersten Profilschenkel 6 auf, der einen Abstand von der Auflageebene hat und sich unterhalb des Auflageteils 2 erstreckt. Auf den ersten Profilschenkel 6 sind die Klemmstücke 7 aufgesteckt, die an den Endbereichen der Abdeckvorrichtung 3 befestigt sind, um die Abdeckvorrichtung 3 auf dem Gestell festzuspannen und daran zu halten. Durch Aufstecken der Klemmstücke 7 auf den ersten Profilschenkel 6, kann die Abdeckvorrichtung 3 schnell und einfach an der Spannleiste 4 befestigt werden. Die Klemmstücke 7 können genauso einfach wieder von dem ersten Profilschenkel 6 abgezogen werden, um die Abdeckvorrichtung 3 von dem Gestell abzunehmen und beispielsweise zu waschen oder auszutauschen.

Die Klemmstücke 7 sind leistenartige Klemmhalter mit einem etwa U-förmigen Querschnitt aus Kunststoff und können im Stranggussverfahren kostengünstig hergestellt werden. Die U-Form ermöglicht es, das Klemmstück 7 auf den Profilschenkel 6 aufzustecken, wobei die leistenartige Form des Klemmhalters 7 einen verbesserten Einzug gewährleistet, d.h. die Faltenbildung am Rand 5 der Abdeckvorrichtung 3 verhindert. Die Klemmstücke 7 sind an den Endbereichen der Abdeckvorrichtung 3 angenäht, sodass eine dauerhafte und stabile Befestigung sichergestellt ist.

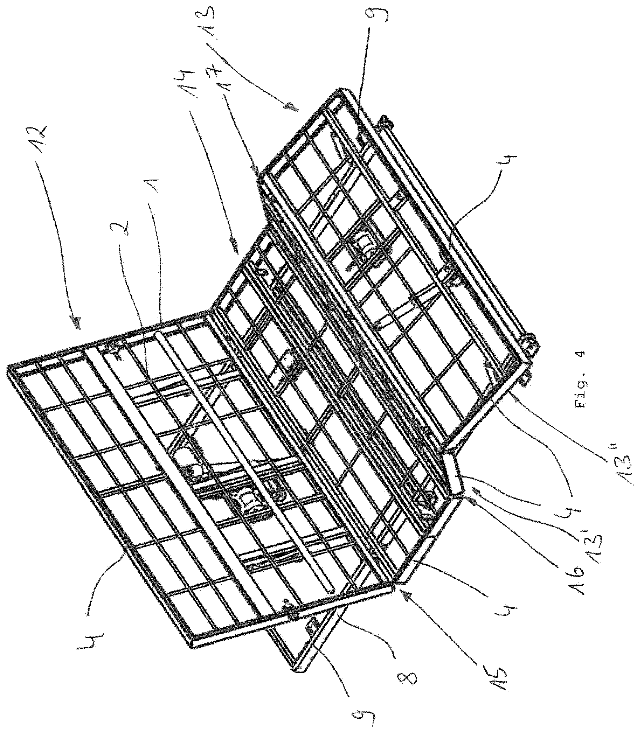

Fig. 4 zeigt ein zweites Rahmenteil 8 mit Haltern 9 und daran befestigten Bettfüßen vorgesehen, wobei das Rahmenteil 1 an dem zweiten Rahmenteil 8 befestigt ist. Das zweite Rahmenteil 8 bietet für das Bettgestell eine verbesserte Stabilität. Sofern das erste Rahmenteil 1 bewegbare Teile aufweist, wie es in Fig. 4 gezeigt ist, können diese durch Scharniere oder Gelenkhebel an dem zweiten Rahmenteil 8 befestigt sein und relativ zu dem zweiten Rahmenteil 8 verstellt werden.

Das erste Rahmenteil 1, das zweite Rahmenteil 8 sowie das Auflageteil 2 bestehen aus Metall. Dadurch lassen sich sämtliche Bauteile durch Schweißen kostengünstig und dauerhaft miteinander verbinden.

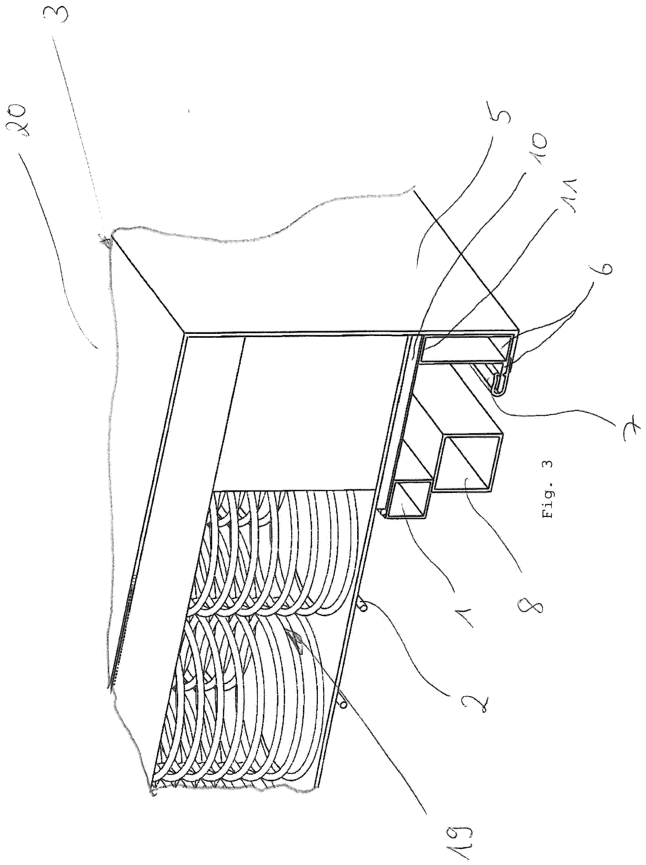

Der Streifen 10 dient als Erweiterung des Auflageteils 2. Auf dem Streifen 10 können beispielsweise Polsterteile aufgelegt werden, wie es in Fig. 3 gezeigt ist. Wesentlich ist dabei, dass das Auflageteil 2 und der Steifen 10 in der Weise an dem ersten Rahmenteil 1 befestigt sind, dass diese eine ebene Auflagefläche bilden.

In Fig. 4 ist ein Bettgestell ohne Abdeckvorrichtung gezeigt, welches verstellbare Segmente aufweist. Dazu ist das erste Rahmenteil 1 samt Auflageteil 2 und die Spannleiste 4 in ein verstellbares Kopfteil 12, ein verstellbares Fußteil 13 und ein feststehendes Mittelteil 14 unterteilt. Das erste Rahmenteil 1 ist mit seinem Mittelteil 14 an dem zweiten Rahmenteil 8 fest verschweißt, wobei das Kopfteil 12 und das Fußteil 13 relativ zu dem zweiten Rahmenteil 8 verstellbar sind.

Die Ränder 5 der Abdeckvorrichtung weisen in ersten Übergangsbereichen 15 zwischen dem Mittelteil 14 und dem Kopfteil 12 und in zweiten Übergangsbereichen 16 zwischen dem Mittelteil 14 und dem Fußteil 13 jeweils einen Schlitz auf, durch den die Ränder in Randabschnitte geteilt sind. An jedem Randabschnitt ist ein Klemmstück befestigt. Das Fußteil ist in weitere zwei Teile 13',13'' unterteilt. Diese Ausgestaltung ermöglicht eine Verstellung der gesamten mit der Abdeckvorrichtung 3 bespannten Teile des Bettgestells. Das Bettgestell behält also auch bei einer Verstellung von Kopf- 12 und/oder Fußteil 13 seine ansprechende Erscheinung, weil die Abdeckung 3 an den bewegten Teilen gehalten ist und mitbewegt wird. Da die Klemmstücke 7 nicht ausreichend elastisch sind, müssen diese in den Übergangsbereichen 15,16,17 durchtrennt sein, um die entsprechende Bewegung zuzulassen. Die Verstellung des Kopfteils 12 und des Fußteils 13 oder der Fußteile 13',13'' erfolgt elektrisch, um den Komfort zu erhöhen. Elektrische Antriebe sind in Fig. 4 unterhalb des Kopfteles 12 und unterhalb des Fußteiles 13 ersichtlich.

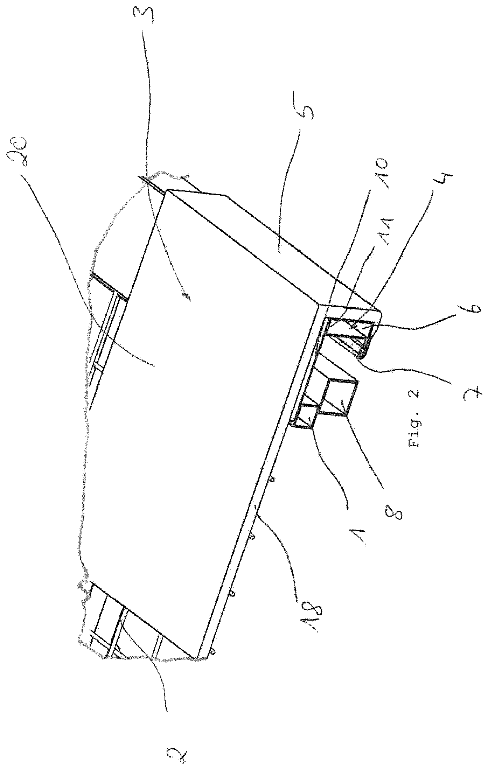

In einer einfachen Ausführungsform ist die Abdeckvorrichtung 3 unmittelbar auf das Auflageteil 2 aufgelegt, wie es Fig. 1 zeigt. Fig. 2 zeigt ein Ausführungsbeispiel, bei dem die Abdeckvorrichtung 3 zusätzlich mit einem Schaumstoff 18 versteppt ist, der zwischen der Abdeckvorrichtung 3 und dem Auflageteil 2 angeordnet ist, wobei der Schaumstoff 18 beispielsweise als Schutz der Abdeckvorrichtung 3 dienen kann. In Fig. 3 ist eine Ausführungsform gezeigt, bei der auf das Auflageteil 2 und/oder den Streifen 10 eine Taschenfederkernmatratze 19 aufgelegt ist, wobei das Auflageteil 2 samt Polsterung von der Abdeckvorrichtung 3 überdeckt ist. Auf das Auflageteil 2 kann eine weitere Federkernmatratze aufgelegt sein, auf die ein Topper aufgebracht wird. Dieser Aufbau ist an sich für ein Boxspringbett bekannt.

Die Abdeckvorrichtung 3 ist vorzugsweise ein quaderartiger Bezug, mit einer Oberseite 20, die zumindest über das Auflagerteil 2 und einen Teil des ersten Rahmenteils 1 gespannt ist, mit Rändern 5 als Seitenwände des quaderartigen Bezuges, die einen Teil des ersten Rahmenteils 1 und die Spannleiste 4 überdecken und an deren Endbereichen die Klemmstücke 7 befestigt sind, die auf die Profilschenkel 6 aufgesteckt sind und mit denen der Bezug in Solllage gehalten ist und mit einer Unterseite, die eine quadratische oder rechteckige durch die Endbereiche und die daran befestigten Klemmstücke 7 eingerahmte Öffnung aufweist. Die Öffnung ist vorgesehen, um den Bezug über die zu überdeckenden Teile des Bettgestells ziehen und ausrichten zu können. Mit den Klemmstücken 7 wird der Bezug dann an den Profilschenkel 6 unter Spannung fixiert.

Die Erfindung ist nicht auf die Ausführungsbeispiele beschränkt, sondern im Rahmen der Offenbarung und den Patenansprüchen vielfach variabel.

Alle in der Beschreibung und/oder Zeichnung offenbarten Einzel- und Kombinationsmerkmale werden als erfindungswesentlich angesehen.

### Bezugszeichenliste

1 erstes Rahmenteil
2 Auflageteil
3 Abdeckvorrichtung
4 Spannleiste
5 Ränder von 3
6 erster Profilschenkel
7 Klemmstücke
8 zweites Rahmenteil
9 Halter
10 Streifen
11 zweiter Profilschenkel
12 Kopfteil
13 Fußteil
14 Mittelteil
15 erster Übergangsbereich
16 zweiter Übergangsbereich
17 dritter Übergangsbereich
18 Schaumstoff
19 Matratze
20 Oberseite

## Patentansprüche

1. Bettgestell
- mit einem umlaufenden ersten Rahmenteil (1),
- einem am ersten Rahmenteil (1) befestigten oder befestigbaren formstabilen Auflageteil (2),
- einer das erste Rahmenteil (1) samt Auflageteil (2) überdeckenden Abdeckvorrichtung (3) und
- einer mehrteiligen umlaufenden Spannleiste (4),
- die von Rändern (5) der Abdeckvorrichtung (3) überdeckt und umgriffen ist, wobei die Ränder (5) mit ihren freien, die Spannleiste (4) überragenden Endbereichen umgeschlagen und unterseitig an Bestandteilen der Spannleiste (4) fixiert sind,
**dadurch gekennzeichnet, dass**
- die Spannleiste (4) ein Profil ist, welches sich quer zu einer Auflageebene des Auflageteils (2) erstreckt und einen parallel zum Auflageteil (2) abragenden ersten Profilschenkel (6) aufweist, der einen Abstand von der Auflageebene hat und sich unterhalb des Auflageteils (2) erstreckt, und
- dass an den Endbereichen der Abdeckvorrichtung (3) Klemmstücke (7) befestigt sind, die in der Solllage auf den ersten Profilschenkel (6) aufgesteckt sind.

2. Bettgestell nach Anspruch 1, **dadurch gekennzeichnet, dass** das Auflageteil (2) und die Spannleiste (4) sowie die Abdeckvorrichtung (3) an dem ersten Rahmenteil (1) befestigt sind, wobei das Bettgestell ein zweites Rahmenteil (8) aufweist, an dem das erste Rahmenteil (1) befestigt oder befestigbar ist.

3. Bettgestell nach einem der Ansprüche 1 oder 2,
**dadurch gekennzeichnet, dass** das zweite Rahmenteil (8) Halter und daran befestigbare oder befestigte Bettfüße aufweist.

4. Bettgestell nach einem der Ansprüche 1 bis 3, **dadurch gekennzeichnet, dass** das erste Rahmenteil (1), das zweite Rahmenteil (8) sowie das Auflageteil (2) aus Metall bestehen.

5. Bettgestell nach einem der Ansprüche 1 bis 4, **dadurch gekennzeichnet, dass** die Spannleiste (4) ein Metallprofil ist.

6. Bettgestell nach einem der Ansprüche 1 bis 5, **dadurch gekennzeichnet, dass** die Spannleiste (4) ein Kunststoffprofil ist.

7. Bettgestell nach einem der Ansprüche 1 bis 6, **dadurch gekennzeichnet, dass** die Klemmstücke (7) leistenartige Klemmhalter mit einem etwa U-förmigen Querschnitt sind.

8. Bettgestell nach einem der Ansprüche 1 bis 7, **dadurch gekennzeichnet, dass** die Klemmstücke (7) Kunststoffprofile sind.

9. Bettgestell nach einem der Ansprüche 1 bis 8, **dadurch gekennzeichnet, dass** die Klemmstücke (7) an den Endbereichen der Abdeckvorrichtung (3) angenäht sind.

10. Bettgestell nach einem der Ansprüche 1 bis 9,
**dadurch gekennzeichnet, dass** die Spannleiste (4) ein Hohlprofil mit einem quadratischen oder rechteckigen Querschnitt ist, wobei ein parallel zum Auflageteil (2) gerichteter erster Profilschenkel (6) in Richtung unter das Auflageteil (2) verlängert ist, wobei der erste Profilschenkel (6) einen Abstand von der Auflageebene aufweist.

11. Bettgestell nach einem der Ansprüche 1 bis 10,
**dadurch gekennzeichnet, dass** die Spannleiste (4) ein L-Profil, ein U-Profil oder ein C-Profil ist, wobei wenigstens ein erster Profilschenkel (6) parallel zum Auflageteil (2) in Richtung unter das Auflageteil (2) gerichtet ist und wenigstens ein zweiter Profilschenkel quer zur Auflageebene gerichtet ist.

12. Bettgestell nach einem der Ansprüche 1 bis 11,
**dadurch gekennzeichnet, dass** am Rahmenteil (1) ein vorzugsweise umlaufender Streifen (10) aus Metall oder Kunststoff zur Erweiterung des Auflageteils (2) befestigt ist, wobei der Streifen (10) und das Auflageteil (2) in einer Ebene angeordnet sind, sodass die der Aufstandsebene des Bettgestells abgewandte Oberfläche des Streifens (10) und des Auflageteils (2) eine gemeinsame ebene Auflagefläche bilden.

13. Bettgestell nach einem der Ansprüche 1 bis 12,
**dadurch gekennzeichnet, dass** die Spannleiste (4) einen zweiten Profilschenkel (11) aufweist, mit dem die Spannleiste (4) an dem ersten Rahmenteil (1) befestigt ist, wobei der zweite Schenkel (11) der Streifen (10) ist, mit dem die Spannleiste (4) am ersten Rahmenteil (1) befestigt ist.

14. Bettgestell nach einem der Ansprüche 1 bis 13,
**dadurch gekennzeichnet, dass** das erste Rahmenteil (1) samt Auflageteil (2) und die Spannleiste (4) in ein verstellbares Kopfteil (12), ein verstellbares Fußteil (13) und ein feststehendes Mittelteil (14) unterteilt ist, wobei das erste Rahmenteil (1) mit seinem Mittelteil (14) an dem zweiten Rahmenteil (8) fest fixiert ist, vorzugsweise verschweißt oder verschraubt ist, und das Kopfteil (12) und das Fußteil (13) relativ zu dem zweiten Rahmenteil (8) verstellbar sind, wobei die Ränder (5) der Abdeckvorrichtung in ersten Übergangsbereichen (15) zwischen dem Mittelteil (14) und dem Kopfteil (12) und in zweiten Übergangsbereichen (16) zwischen dem Mittelteil (14) und dem Fußteil (13) jeweils einen Schlitz aufweisen, durch den die Ränder in Randabschnitte geteilt sind, wobei an jedem Randabschnitt ein Klemmstück (7) befestigt ist.

15. Bettgestell nach Anspruch 14, **dadurch gekennzeichnet, dass** das Fußteil (13) zwei relativ zueinander bewegbare Teile (13',13'') aufweist, wobei der Randabschnitt des Fußteils (13) in einem dritten Übergangsbereich (17) zwischen den Teilen (13',13") einen Schlitz aufweist, durch den der Randbereich in weitere Abschnitte geteilt ist, wobei an jedem Abschnitt ein Klemmstück (7) befestigt ist.

16. Bettgestell nach einem der Ansprüche 1 bis 15,
**dadurch gekennzeichnet, dass** das Kopfteil (12) und das Fußteil (13) oder die Fußteile (13',13") elektrisch verstellbar sind.

17. Bettgestell nach einem der Ansprüche 1 bis 16,
**dadurch gekennzeichnet, dass** die Abdeckvorrichtung (3) eine Tuchbespannung aus Textil oder Leder oder einer Kombination dieser Materialien ist.

18. Bettgestell nach einem der Ansprüche 1 bis 17,
**dadurch gekennzeichnet, dass** die Abdeckvorrichtung (3) mit einem Schaumstoff (18) versteppt ist.

19. Bettgestell nach einem der Ansprüche 1 bis 18,
**dadurch gekennzeichnet, dass** die Abdeckvorrichtung (3) aus einer Folie besteht.

20. Bettgestell nach einem der Ansprüche 1 bis 19,
**dadurch gekennzeichnet, dass** auf das Auflageteil (2) und/oder den Streifen (10) eine Polsterung aufgelegt ist, wobei die Polsterung vorzugsweise eine Matratze (19) mit einem Federkernaufbau oder Taschenfederkernaufbau ist, und wobei das Auflageteil (2) samt Matratze (19) von der Abdeckvorrichtung (3) überdeckt ist.

21. Bettgestell nach einem der Ansprüche 1 bis 20,
**dadurch gekennzeichnet, dass** die Abdeckvorrichtung (3) ein quaderartiger Bezug ist, mit einer Oberseite (20), die zumindest über das Auflageteil (2) und einen Teil des ersten Rahmenteils (1) gespannt ist, mit Rändern (5) als Seitenwände des quaderartigen Bezuges, die einen Teil des ersten Rahmenteils (1) und die Spannleiste (4) überdecken und an deren Endbereichen die Klemmstücke (7) befestigt sind, die auf die Profilschenkel (6) aufgesteckt sind und mit denen der Bezug in Solllage gehalten ist und mit einer Unterseite, die eine quadratische oder rechteckige durch die Endbereiche und die daran befestigten Klemmstücke (7) eingerahmte Öffnung aufweist.

22. Bettgestell nach einem der Ansprüche 1 bis 21,
**dadurch gekennzeichnet, dass** auf das Auflageteil (2) mindestens eine weitere Polsterung, vorzugsweise eine Matratze mit Federkernaufbau, aufgelegt oder auflegbar ist.

## Claims

1. A bed frame
- with a peripheral first frame section (1),
- a dimensionally stable bearing part (2) attached or attachable to the first frame section (1),
- a covering device (3) covering the first frame section (1) together with the bearing part (2), and
- a multi-part peripheral fitting bar (4),
- which is covered and surrounded by edges (5) of the covering device (3), the edges (5) being turned over with their free end regions protruding over the fitting bar (4) and fixed on the underside to components of the fitting bar (4),
**characterized by that**
- the fitting bar (4) is a profile, which extends transversely to a bearing plane of the bearing part (2) and has a first profile leg (6) projecting parallel to the bearing part (2), which profile leg (6) is spaced apart from the bearing plane and extends below the bearing part (2), and
- that clamping pieces (7) are attached to the end regions of the covering device (3), which, in the intended position, are plugged onto the first profile leg (6).

2. The bed frame of claim 1, **characterized by that** the bearing part (2) and the fitting bar (4) as well as the covering device (3) are attached to the first frame section (1), the bed frame having a second frame section (8), to which the first frame section (1) is attached or can be attached.

3. The bed frame of one of claims 1 or 2, **characterized by that** the second frame section (8) has holders and bed feet that can be attached or are attached to it.

4. The bed frame of one of claims 1 to 3, **characterized by that** the first frame section (1), the second frame section (8), and the bearing part (2) are made of metal.

5. The bed frame of one of claims 1 to 4, **characterized by that** the fitting bar (4) is a metal profile.

6. The bed frame of one of claims 1 to 5, **characterized by that** the fitting bar (4) is a plastic profile.

7. The bed frame of one of claims 1 to 6, **characterized by that** the clamping pieces (7) are bar-like clamping holders with an approximately U-shaped cross-section.

8. The bed frame of one of claims 1 to 7, **characterized by that** the clamping pieces (7) are plastic profiles.

9. The bed frame of one of claims 1 to 8, **characterized by that** the clamping pieces (7) are sewn onto the end regions of the covering device (3).

10. The bed frame of one of claims 1 to 9, **characterized by that** the fitting bar (4) is a hollow profile with a square or rectangular cross-section, a first profile leg (6) directed parallel to the bearing part (2) being extended in the direction below the bearing part (2), the first profile leg (6) having a distance from the bearing plane.

11. The bed frame of one of claims 1 to 10, **characterized by that** the fitting bar (4) is an L-profile, a U-profile, or a C-profile, at least one first profile leg (6) being directed parallel to the bearing part (2) in the direction below the bearing part (2) and at least one second profile leg being directed transversely to the bearing plane.

12. The bed frame of one of claims 1 to 11, **characterized by that** a preferably circumferential strip (10) made of metal or plastic is attached to the frame section (1) to extend the bearing part (2), the strip (10) and the bearing part (2) being arranged in one plane, so that the surface of the strip (10) facing away from the contact plane of the bed frame and the bearing part (2) form a common flat contact surface.

13. The bed frame of one of claims 1 to 12, **characterized by that** the fitting bar (4) has a second profile leg (11) with which the fitting bar (4) is attached to the first frame section (1), the second leg (11) being the strip (10) with which the fitting bar (4) is attached to the first frame section (1).

14. The bed frame of one of claims 1 to 13, **characterized by that** the first frame section (1) together with the bearing part (2) and the fitting bar (4) is divided into an adjustable head section (12), an adjustable foot section (13), and a fixed middle section (14), the first frame section (1) being firmly fixed by its middle section (14) to the second frame section (8), preferably welded or screwed, and the head section (12) and the foot section (13) being adjustable relative to the second frame section (8), the edges (5) of the covering device in first transition regions (15) between the middle section (14) and the head section (12) and in second transition regions (16) between the middle section (14) and the foot section (13) each having a slot, by means of which the edges are divided into edge sections, with a clamping piece (7) being fixed to each edge section.

15. The bed frame of claim 14, **characterized by that** the foot section (13) has two sections (13', 13'') movable relative to one another, the edge section of the foot section (13) having a slot in a third transition region (17) between the sections (13', 13''), by means of which the edge region is divided into further sections, a clamping piece (7) being attached to each section.

16. The bed frame of one of claims 1 to 15, **characterized by that** the head section (12) and the foot section (13) or the foot sections (13', 13'') are electrically adjustable.

17. The bed frame of one of claims 1 to 16, **characterized by that** the covering device (3) is a fabric covering made of textile or leather or a combination of these materials.

18. The bed frame of one of claims 1 to 17, **characterized by that** the covering device (3) is quilted with foam material (18).

19. The bed frame of one of claims 1 to 18, **characterized by that** the covering device (3) consists of a film.

20. The bed frame of one of claims 1 to 19, **characterized by that** a padding element is placed on the bearing part (2) and/or the strip (10), the padding element preferably being a mattress (19) with a spring core structure or a pocket spring core structure, and the bearing part (2) together with the mattress (19) being covered by the covering device (3).

21. The bed frame of one of claims 1 to 20, **characterized by that** the covering device (3) is a cuboid duvet cover with a top side (20) that is stretched at least over the bearing part (2) and part of the first frame section (1), with edges (5) as side walls of the cuboid duvet cover, which cover part of the first frame section (1) and the fitting bar (4) and to whose end regions the clamping pieces (7) are attached, which are plugged onto the profile leg (6) and with which the duvet cover is held in the intended position, and with a bottom side that has a square or rectangular opening framed by the end regions and the clamping pieces (7) attached to them.

22. The bed frame of one of claims 1 to 21, **characterized by that** at least one further padding element, preferably a mattress with a spring core structure, is placed or can be placed on the bearing part (2).

## Revendications

1. Sommier
- avec une première partie de cadre (1) périphérique,
- une partie d'appui (2) indéformable fixée ou pouvant être fixée à la première partie de cadre (1),
- un dispositif de recouvrement (3) recouvrant la première partie de cadre (1) et aussi la partie d'appui (2), et
- une barre de tension (4) périphérique en plusieurs parties,
- qui est recouverte et entourée par les bords (5) du dispositif de recouvrement (3), les bords (5) étant repliés avec leurs extrémités libres dépassant la barre de tension (4) et fixés sur leur faces inférieures à des éléments de la barre de tension (4),
**caractérisé en ce que**
- la barre de tension (4) est un profilé qui s'étend transversalement à un plan d'appui de la partie d'appui (2) et présente une première branche de profilé (6) faisant saillie parallèlement à la partie d'appui (2), qui est espacée du plan d'appui et s'étend sous la partie d'appui (2), et que
- des pièces de serrage (7) sont fixées aux extrémités du dispositif de recouvrement (3) et sont enfichées, dans la position souhaitée, sur la première branche de profilé (6).

2. Sommier selon la revendication 1, **caractérisé en ce que** la partie d'appui (2) et la barre de tension (4) ainsi que le dispositif de recouvrement (3) sont fixés à la première partie de cadre (1), le sommier comportant une deuxième partie de cadre (8) à laquelle la première partie de cadre (1) est fixée ou peut être fixée.

3. Sommier selon l'une des revendications 1 ou 2, **caractérisé en ce que** la deuxième partie de cadre (8) comporte des supports et des pieds de lit pouvant y être fixés ou y étant fixés.

4. Sommier selon l'une des revendications 1 à 3, **caractérisé en ce que** la première partie de cadre (1), la deuxième partie de cadre (8) ainsi que la partie d'appui (2) sont en métal.

5. Sommier selon l'une des revendications 1 à 4, **caractérisé en ce que** la barre de tension (4) est un profilé en métal.

6. Sommier selon l'une des revendications 1 à 5, **caractérisé en ce que** la barre de tension (4) est un profilé en plastique.

7. Sommier selon l'une des revendications 1 à 6, **caractérisé en ce que** les pièces de serrage (7) sont des supports de serrage en forme de barres avec une section transversale approximativement en forme d'U.

8. Sommier selon l'une des revendications 1 à 7, **caractérisé en ce que** les pièces de serrage (7) sont des profilés en plastique.

9. Sommier selon l'une des revendications 1 à 8, **caractérisé en ce que** les pièces de serrage (7) sont cousues aux extrémités du dispositif de recouvrement (3).

10. Sommier selon l'une des revendications 1 à 9, **caractérisé en ce que** la barre de tension (4) est un profilé creux de section carrée ou rectangulaire, une première branche de profilé (6) orientée parallèlement à la partie d'appui (2) se prolongeant vers le bas sous la partie d'appui (2), la première branche de profilé (6) présentant un écart par rapport au plan d'appui.

11. Sommier selon l'une des revendications 1 à 10, **caractérisé en ce que** la barre de tension (4) est un profilé en L, un profilé en U ou un profilé en C, au moins une première branche de profilé (6) étant orientée parallèlement à la partie d'appui (2) en direction vers le bas sous la partie d'appui (2), et au moins une deuxième branche de profilé étant orientée transversalement au plan d'appui.

12. Sommier selon l'une des revendications 1 à 11, **caractérisé en ce qu'**une bande (10) de préférence périphérique en métal ou en plastique est fixée à la partie de cadre (1) pour agrandir la partie d'appui (2), la bande (10) et la partie d'appui (2) étant disposées dans un plan, de sorte que la surface de la bande (10) et de la partie d'appui (2) opposée au plan d'appui du sommier forment une surface d'appui plane commune.

13. Sommier selon l'une des revendications 1 à 12, **caractérisé en ce que** la barre de tension (4) comporte une deuxième branche de profilé (11), à l'aide de laquelle la barre de tension (4) est fixée à la première partie de cadre (1), la deuxième branche (11) étant la bande (10), à l'aide de laquelle la barre de tension (4) est fixée à la première partie de cadre (1).

14. Sommier selon l'une des revendications 1 à 13, **caractérisé en ce que** la première partie de cadre (1) avec la partie d'appui (2) et la barre de tension (4) est divisée en une partie de tête (12) réglable, une partie de pied (13) réglable et une partie centrale (14) fixe, la première partie de cadre (1) étant fixée avec sa partie centrale (14) à la deuxième partie de cadre (8), de préférence soudée ou vissée, et la partie de tête (12) et la partie de pied (13) étant réglables par rapport à la deuxième partie de cadre (8), les bords (5) du dispositif de recouvrement présentant, dans des premières zones de transition (15) entre la partie centrale (14) et la partie de tête (12) et dans des deuxièmes zones de transition (16) entre la partie centrale (14) et la partie de pied (13), chacune une fente par laquelle les bords sont divisés en des sections de bord, une pièce de serrage (7) étant fixée à chaque section de bord.

15. Sommier selon la revendication 14, **caractérisé en ce que** la partie de pied (13) comporte deux parties (13', 13'') mobiles l'une par rapport à l'autre, la partie de bord de la partie de pied (13) présentant, dans une troisième zone de transition (17) entre les parties (13', 13''), une fente par laquelle la zone de bord est divisée en d'autres sections, une pièce de serrage (7) étant fixée à chaque section.

16. Sommier selon l'une des revendications 1 à 15, **caractérisé en ce que** la partie de tête (12) et la partie de pied (13) ou les parties de pied (13', 13'') sont réglables électriquement.

17. Sommier selon l'une des revendications 1 à 16, **caractérisé en ce que** le dispositif de recouvrement (3) est un revêtement en tissu ou en cuir ou une combinaison de ces matériaux.

18. Sommier selon l'une des revendications 1 à 17, **caractérisé en ce que** le dispositif de recouvrement (3) est matelassé avec une mousse (18).

19. Sommier selon l'une des revendications 1 à 18, **caractérisé en ce que** le dispositif de recouvrement (3) est constitué d'un film.

20. Sommier selon l'une des revendications 1 à 19, **caractérisé en ce qu'**un rembourrage est posé sur la partie d'appui (2) et/ou la bande (10), le rembourrage étant de préférence un matelas (19) avec une structure à noyau de ressorts ou une structure à noyau de ressorts ensachés, et la partie d'appui (2) avec le matelas (19) étant recouverte par le dispositif de recouvrement (3).

21. Sommier selon l'une des revendications 1 à 20, **caractérisé en ce que** le dispositif de recouvrement (3) est une taie parallélépipédique avec une face supérieure (20) qui est tendue au moins sur la partie d'appui (2) et une partie de la première partie de cadre (1), avec des bords (5) servant de parois latérales de la taie parallélépipédique, qui recouvrent une partie de la première partie de cadre (1) et la barre de tension (4) et aux extrémités desquels sont fixées les pièces de serrage (7) qui sont enfichées sur les branches de profilé (6) et avec lesquelles la taie est maintenue dans la position souhaitée, et avec une face inférieure qui présente une ouverture carrée ou rectangulaire encadrée par les extrémités et les pièces de serrage (7) qui y sont fixées.

22. Sommier selon l'une des revendications 1 à 21, **caractérisé en ce qu'**au moins un autre rembourrage, de préférence un matelas à noyau de ressorts, est posé ou peut être posé sur la partie d'appui (2).
